# FASCICULE DE BREVET EUROPEEN

(11) **EP 1 449 574 B1**
(45) Date de publication et mention de la délivrance du brevet: **24.05.2006**
(21) Numéro de dépôt: 04100695.8
(22) Date de dépôt: 20.02.2004
(51) Int. Cl.: B01D 46/02, B01D 46/06, B01D 46/42

(54) **Manche souple de filtration, installation comportant une telle manche et procédé de remplacement d'une manche usagée**
Flexibler Filterschlauch, diesen enthaltende Vorrichtung und Verfahren zum Auswechseln eines gebrauchten Filterschlauchs
Filter tube of flexible material, installation comprising said filter tube and process to replace a used filter tube

(30) Priorité: 21.02.2003 FR 0302140
(43) Date de publication de la demande: 25.08.2004
(73) Titulaire: Vallee, Yvon M., 14490 Balleroy (FR)
(72) Inventeur: Vallee, Yvon M., 14490 Balleroy (FR)
(74) Mandataire: Kohn, Philippe

(56) Documents cités:
- DE-A- 2 015 303
- DE-A- 3 313 357
- GB-A- 317 078
- SE-B- 426 361
- US-A- 540 856
- US-A- 1 757 834
- US-A- 2 769 506
- US-A- 3 095 289
- US-A- 3 292 348
- US-A- 3 475 884

## Description

La présente invention concerne une manche déformable de filtration destinée notamment à une installation de filtration industrielle.

L'invention concerne plus particulièrement une manche de filtration de forme générale tubulaire destinée à équiper une installation de filtration dans laquelle la manche s'étend sensiblement verticalement, du type qui comporte :
- une extrémité supérieure ouverte et une extrémité inférieure fermée;
- une paroi latérale cylindrique en matériau déformable, ou souple, de filtration ;
- et des moyens de mise en tension de la manche selon son axe général vertical.

On connaît différents exemples d'installation de filtrage ou filtration industrielle faisant appel à un très grand nombre de manches déformables de filtration.

Les manches sont en général de forme cylindrique et d'orientation verticale.

Chaque manche fonctionne en dépression, c'est-à-dire que l'air ou le gaz à filtrer pénètre dans la manche à travers la paroi cylindrique latérale et est aspiré à l'intérieur de la manche vers le haut.

Il est donc nécessaire, pour résister aux efforts dus à la filtration dite en dépression, que chaque manche présente, directement ou indirectement, une résistance structurelle suffisante pour ne pas "s'écraser", c'est-à-dire pour pouvoir assurer de manière fiable sa fonction d'élément de filtration à grande surface périphérique.

Afin de conférer à chaque manche une rigidité suffisante, il est notamment connu de lui associer une cage ou panier qui s'étend verticalement sur toute la hauteur de la manche à l'intérieur de celle-ci.

Chaque cage ou panier est un élément structurel complexe qui réduit la surface filtrante totale disponible et qui est particulièrement difficile à mettre en place, notamment pour des manches de grande hauteur qui nécessitent alors de pouvoir assembler verticalement plusieurs cages ou paniers, et de disposer d'une grande hauteur au-dessus de la plaque supérieure de l'installation dans laquelle est montée l'extrémité supérieure de la manche.

Le document WO-A-00/72942 illustre un exemple de conception de panier ou cage de renfort d'une manche déformable de filtration.

Une autre technique consiste à renforcer structurellement la manche déformable par une série d'anneaux, internes ou externes, de renfort dont chacun est de forme annulaire circulaire et s'étend dans un plan horizontal, les différents anneaux de renfort étant répartis régulièrement le long de la hauteur de la manche.

Ces anneaux ont aussi pour inconvénient de réduire la surface filtrante, dans une moindre mesure que dans le cas du panier ou de la cage.

Par ailleurs, les anneaux ne sont pas suffisants pour conférer une rigidité suffisante à l'ensemble de la manche qui doit être maintenue sensiblement tendue verticalement entre ses deux extrémités verticales opposées supérieure et inférieure.

Ainsi, de manière connue, chaque extrémité supérieure ouverte d'une manche est accrochée, c'est-à-dire fixée, dans un orifice correspondant d'une plaque horizontale supérieure appartenant à l'installation de filtration.

De plus, chaque manche, au niveau de son extrémité inférieure, doit aussi être accrochée sur une plaque horizontale inférieure.

Un tel agencement illustrant la mise sous tension de chaque manche par fixation de ses deux extrémités opposées est illustré dans le document WO-A-01/51172.

Bien entendu, la maintenance des installations de filtration à manches déformables nécessite de pouvoir changer les manches lorsque celles-ci sont encrassées ou colmatées.

Chaque opération de changement s'effectue par extraction verticalement de bas en haut d'une manche à partir de la plaque supérieure horizontale de l'installation.

Cette opération nécessite donc d'intervenir en partie basse pour décrocher l'extrémité inférieure de la manche déformable, c'est-à-dire une intervention à l'intérieur de l'enceinte de l'installation de filtration dans une zone présentant de très grands risques pour les intervenants, puisqu'il s'agit de la zone ou enceinte dans laquelle pénètrent les gaz à filtrer, c'est-à-dire une zone susceptible de contenir de nombreux éléments polluants et/ou contaminants.

La présente invention a pour but de proposer une nouvelle conception d'une manche déformable de filtration dont la "rigidité" en fonctionnement est assurée, sans faire appel à une cage ou un panier de renfort, et ne nécessitant aucune intervention humaine en partie basse dans une zone dangereuse, tant pour la première installation que pour le renouvellement des manches.

A cet effet, l'invention propose une manche de filtration de forme générale tubulaire destinée à équiper une installation de filtration dans laquelle la manche s'étend sensiblement verticalement, du type qui comporte :
- une extrémité supérieure ouverte et une extrémité inférieure fermée ;
- une paroi latérale cylindrique en matériau déformable de filtration ;
- et un lest individuel de mise en tension de la manche selon son axe général vertical qui est suspendu et fixé de manière démontable à l'extrémité inférieure de la manche par des moyens de fixation comportant une tige centrale de fixation sensiblement coaxiale à l'axe général de la manche, et un corps pesant porté par la tige, du type décrit et représenté dans le document US-A-2.769.506, caractérisée en ce que le corps pesant comporte un trou central traversé par la tige de fixation, et un élément amovible de retenue du corps pesant qui est porté par la tige, et en ce que le corps pesant est en appui par gravité sur l'élément amovible.
   D'autres caractéristiques de la manche selon l'invention sont définies aux revendications secondaires.
   L'invention propose également une installation de filtration comportant une enceinte à l'intérieure de laquelle est agencée au moins une manche de filtration selon l'invention, caractérisée en ce qu'elle comporte des moyens démontables de fixation de l'extrémité supérieure ouverte de la manche.
   Selon d'autres caractéristiques de l'installation ;
- elle comporte des moyens de guidage dans lesquels est reçu un tronçon d'extrémité inférieure du lest ;
- elle reçoit au moins une manche de filtration, la tige de fixation se prolonge verticalement sous le corps pesant, et son tronçon d'extrémité libre inférieure est reçu dans un puits de guidage appartenant à l'installation.

Enfin, l'invention propose un procédé de remplacement d'une manche de filtration selon l'invention dans une installation selon l'invention caractérisé en ce qu'il consiste à :
démonter l'extrémité supérieure de la manche usagée à remplacer ;
extraire la manche usagée avec son lest ; -
démonter le lest de l'extrémité inférieure de la manche usagée ;
fixer ce lest à l'extrémité inférieure du corps d'une manche de remplacement ;
suspendre la manche de remplacement avec son lest à l'intérieur de l'enceinte ;
fixer l'extrémité supérieure ouverte de la manche de remplacement.

Selon le procédé, la manche usagée est extraite hors de l'enceinte verticalement vers le haut.

D'autres caractéristiques et avantages de l'invention apparaîtront à la lecture de la description détaillée qui va suivre pour la compréhension de laquelle on se reportera aux dessins annexés dans lesquels :
- la figure 1 est une vue schématique qui illustre un premier exemple de réalisation d'une manche conforme aux enseignements de l'invention qui est représentée globalement en coupe par un plan vertical axial ;
- la figure 2 est une vue analogue à celle de la figure 1 sur laquelle les composants de la partie inférieure formant lest sont représentés en vue éclatée ;
- la figure 3 est une vue analogue à celle de la figure 1 qui illustre un deuxième mode de réalisation d'une manche selon l'invention à extrémité inférieure fermée et comportant un lest accroché dans un passant ;
- la figure 4 est une vue latérale de détail selon la flèche F4 de la figure 3 ;
- la figure 5 est une vue en éclaté, à grande échelle et en section axiale d'une variante de réalisation des composants de la partie inférieure de la figure 3 ; et
- la figure 6 est une vue analogue à celle de la figure 5 et sur laquelle les différents composants sont illustrés en position montée et assemblée.

Dans la description qui va suivre, des éléments identiques, analogues ou similaires seront désignés par les mêmes chiffres de référence.

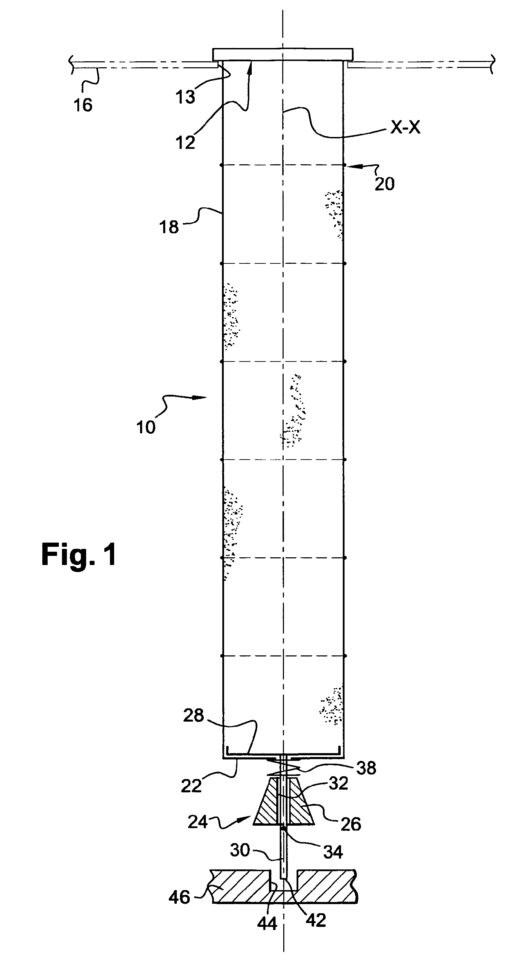

On a représenté schématiquement à la figure 1, une manche déformable cylindrique 10 de filtration qui s'étend selon un axe sensiblement vertical X-X.

De manière connue, une extrémité supérieure annulaire 12 de la manche 10 est fixée de manière démontable et étanche dans une ouverture 13 d'une plaque supérieure 16 appartenant à une installation de filtration, de conception générale connue, comportant par exemple plusieurs manches 10 selon l'invention dont une seule est représentée aux figures.

Le corps de la manche 10 est constitué par un tube ou tuyau 18 en matériau déformable de filtration, notamment en tissu, à travers lequel l'air ou le gaz à filtrer pénètre radialement depuis l'extérieur vers l'intérieur comme indiqué par les flèches sur la figure 1.

A cet effet, la partie haute de l'installation, non représentée, comporte des moyens d'aspiration de l'air ou du gaz à travers la manche 10 depuis son extrémité supérieure 12.

De manière connue, verticalement de place en place, le corps en tissu filtrant 18 de la manche 10 est renforcé par une série d'anneaux externes de renfort 20.

A son extrémité inférieure, la manche 10 est fermée ou obturée par un fond transversal horizontal 22 qui peut être lui aussi de préférence réalisé en matériau filtrant déformable et qui est assemblé au corps tubulaire 18 par couture ou par collage.

Conformément aux enseignements de l'invention, afin de maintenir en permanence la manche 10 dans sa configuration cylindrique verticale, notamment en vue de résister aux effets d'écrasement dus au fonctionnement en dépression, celle-ci est maintenue en tension verticale, selon son axe général X-X, par un lest ou masse pesante 24 qui est suspendu à l'extrémité inférieure 22 de la manche 10.

Avantageusement, grâce à la conception selon l'invention, la tension appliquée à la manche en matériau déformable est constante au cours du temps, et ceci même en cas de détente du matériau déformable. Ainsi, on remédie à un inconvénient important des conceptions selon l'état de la technique selon lesquelles la tension initiale, résultant de l'arrimage de l'extrémité inférieure de la manche, diminue progressivement au cours du temps.

Conformément aux enseignements de l'invention, le lest 24 est un lest individuel associé à une manche 10 comportant un corps pesant proprement dit 26 qui est fixé de manière démontable à l'extrémité inférieure 22 du corps 18 de la manche 10.

Ainsi, chaque lest 24-26 avec ses moyens de fixation démontable peut être réutilisé en association avec une nouvelle manche filtrante 10 lors du remplacement de celle-ci.

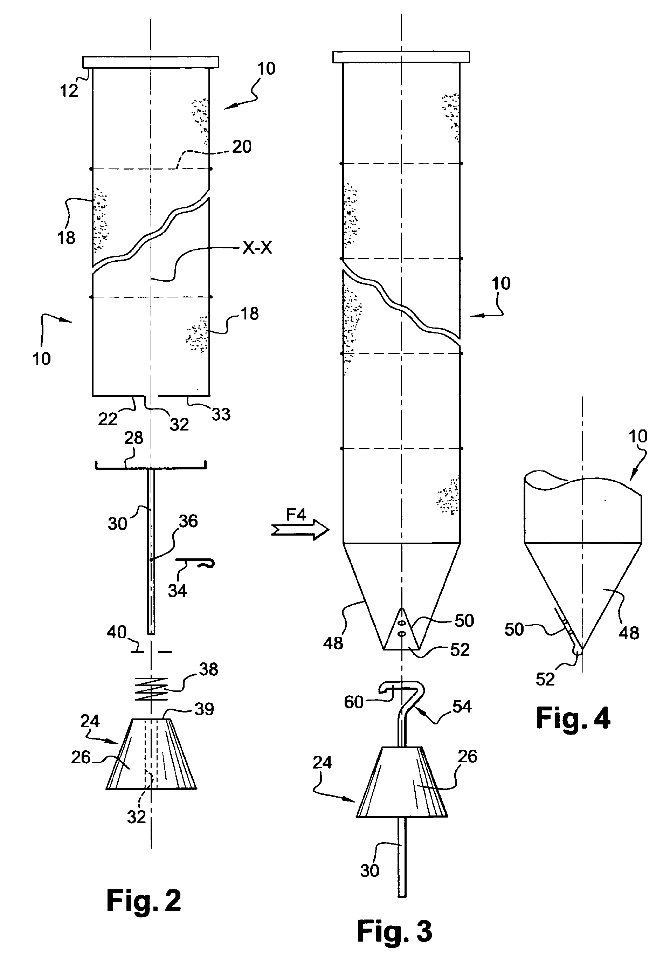

Plus précisément, selon le premier mode de réalisation illustré aux figures 1 et 2, les moyens de fixation démontables sont constitués par un fond plat rigide 28 en forme de disque de dimensions complémentaires de celles du fond 22 de la manche 10 afin de pouvoir être introduit verticalement à l'intérieur de la manche 10 pour venir prendre appui contre la face supérieure interne du fond en tissu 22.

Dans sa partie centrale, la plaque 28, qui est de préférence réalisé en forme de coupelle comme illustré aux figures, se prolonge par un tige centrale de fixation 30 qui s'étend de préférence sensiblement coaxialement à l'axe X-X de la manche à travers un trou ou orifice 32 formé à cet effet dans le fond en tissu filtrant 22 de la manche 10.

La tige 30 est fixée rigidement à la plaque ou plateau supérieur 22 de fixation avec lequel elle forme un ensemble amovible et démontable qui est introduit verticalement de haut en bas dans la manche 10 lors de sa mise en place.

Le corps pesant 26 du lest 24 comporte un trou cylindrique vertical centré 32 pour le passage du corps de la tige 30.

Ainsi, le corps pesant 26 du lest 24 est mis en place verticalement de bas en haut sur la tige 30 après la mise en place de l'ensemble 22-30 à l'intérieur de la manche 10.

Le maintien en position verticale du corps pesant 26 du lest 24 sur la tige 30 est par exemple assuré au moyen du goupille 34 qui s'étend radialement à travers un trou 36 formé à cet effet dans la tige 30.

Il est aussi prévu un ressort 38 qui est un ressort de compression interposé verticalement entre la face supérieure 39 du corps pesant 26 et la face inférieure externe 33 du fond 22 en tissu, avec interposition d'une rondelle 40, de manière à rattraper les différents jeux et à maintenir la plaque 28 en appui vertical vers le bas contre le fond 22, en assurant ainsi aussi l'étanchéité du trou 32 pour le passage de la tige 30.

Selon une autre caractéristique de l'invention, l'extrémité verticale inférieure 42 de la tige 30 de fixation se prolonge verticalement au-delà du corps pesant 26, en dessous de la goupille 34, de manière à pouvoir être reçue verticalement, avec jeu selon la direction radiale, dans un puit de positionnement 44 formé dans une plaque horizontale inférieure 46 appartenant à l'installation qui est équipée de la manche selon l'invention.

La plaque 46 peut être constitué par la plaque de fond de l'installation de dépoussiérage et le puits 44 permet ainsi d'éviter tout déplacement transversal ou radial intempestif de la partie inférieure de la manche 10, et donc de la manche 10 elle-même qui, en utilisation, conserve ainsi son orientation verticale normale de fonctionnement.

Selon une variante non représentée, il peut être prévu des moyens d'étanchéité complémentaire de l'orifice 32 traversé par la tige 30.

Selon une variante de l'invention non représentée, le fond 22 peut être complet et étanche, c'est-à-dire sans trou ou orifice central 32 et le lest pesant 26 avec se moyens de fixation comportant un plateau 28 peut être rapporté à l'extérieur de la manche sous le fond 22, avec par exemple une série de pinces élastiques de fixation qui pincent les disques 28 et la périphérie du fond 22.

Ces pinces ou clips élastiques permettent bien entendu aussi un démontage et un remontage du lest pesant 24-26 comme dans le cas de l'exemple de réalisation illustré aux figures 1 et 2 de façon à pouvoir réutiliser le lest après le changement ou le renouvellement de la manche.

Selon le deuxième mode de réalisation illustré aux figures 3 et 4, la manche 10 est fermée de manière étanche à son extrémité inférieure par une portion 48 de forme conique dont l'extrémité inférieure 50 est repliée verticalement et rabattue, puis cousue ou rivetée, pour constituer une boucle ou passant 52 pour l'accrochage d'un lest pesant.

Le lest 24-26 est ici aussi associé à une tige de fixation 30 dont l'extrémité supérieure 60 est conformée en un crochet susceptible d'être introduit dans le passant 52 de manière démontable.

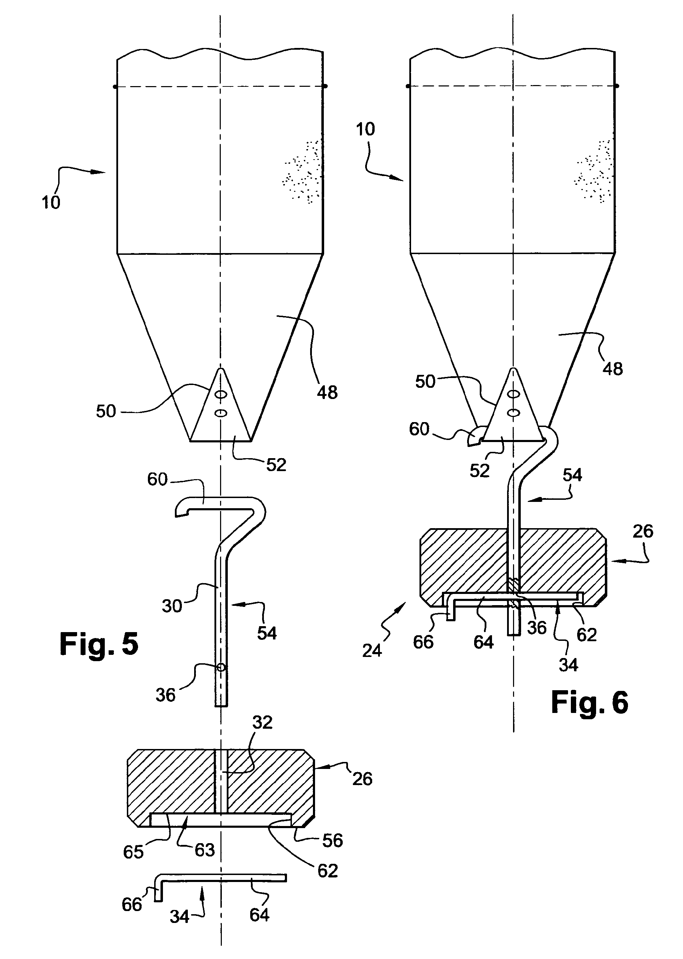

Dans la variante de réalisation illustrée aux figures 5 et 6, le corps pesant 26 du lest 24 se présente sous la forme d'un corps cylindrique plein, réalisé par exemple par moulage en fonte, et qui est délimité par des faces horizontales supérieure 39 et inférieure 56, et qui est traversé axialement par le trou 32 pour le passage de la tige verticale inférieure 30 du crochet 54.

La partie supérieure coudée 60 du crochet 54 destinée à être reçue dans le passant 50, 52 est analogue à celle illustrée à la figure 3.

La face inférieure 56 comporte un logement 63 en forme de lamage cylindrique qui est délimité par une paroi cylindrique concave verticale 62.

La goupille 34 comporte une branche ou tige horizontale principale 64 destinée à traverser le trou 36 de la tige 30 du crochet 54.

La branche 64 se prolonge, à l'une de ses deux extrémités axiales, par une branche verticale de préhension et de manoeuvre 66.

Comme on peut le voir à la figure 6, la longueur hors tout de la goupille 34 est légèrement inférieure au diamètre interne du logement 63 de manière que la branche principale 64 soit reçue dans le logement 63.

Ainsi, les deux extrémités opposées de la branche horizontale 64 s'étendent en regard de la paroi interne concave 62 du logement 63, tandis que la face horizontale supérieure 65 repose par gravité sur la branche horizontale 64.

Ainsi, dans la position montée de la figure 6, la goupille est immobilisée radialement dans le logement 63, c'est à dire qu'elle ne peut pas s'échapper accidentellement hors du trou 36.

L'assemblage du lest et sa suspension assurent donc un auto-verrouillage de la goupille dont l'extraction nécessite une action volontaire initiale pour la dégager hors du logement 63 en soulevant le corps pesant 26 le long de la tige 30.

La tige 30 peut bien entendu comporter plusieurs trous 36 répartis pour le montage de corps pesants de différentes hauteurs.

Le poids du lest est choisi en fonction du diamètre de la manche, des pertes de charges, etc.

La longueur de la portion inférieure de la tige 30 qui s'étend en dessous du corps pesant 26 dépend de la nécessité ou non de l'utiliser pour le guidage de la tige dans un puits 44.

Les puits de guidage 44 peuvent avantageusement être constitués par les mailles d'une grille horizontale inférieure de guidage (non représentée).

Quel que soit le mode de réalisation ou la variante évoqués précédemment, la mise en place ou le démontage d'une manche selon l'invention dans une installation sont particulièrement simples et peuvent s'effectuer entièrement en partie haute de l'installation, c'est-à-dire au-dessus la plaque supérieure 16.

A cet effet, il suffit de tirer verticalement l'ensemble de la manche 10 vers le haut avec son lest pesant 24-26 pour l'extraire hors de l'installation.

La manche est extraite entièrement avec son lest 24 de mise sous tension qui est ensuite démonté de la manche pour être fixé à nouveau sur une manche nouvelle 10, ou sur une manche ayant été nettoyée.

La mise en place s'effectue entièrement verticalement de haut en bas à travers l'ouverture 12 et en partie haute de l'installation, la manche étant descendue progressivement avec son lest préalablement installé à travers le trou 12 jusqu'à ce qu'elle occupe sa position verticale tendue de fonctionnement avec, le cas échéant, l'extrémité inférieure 42 de la tige 30 qui a pénétré par gravité dans un puits 44 de positionnement.

Chaque manche est ainsi suspendue de manière fiable avec son extrémité supérieure ouverte 12 fixée en partie haute au niveau du trou 13 de la plaque 16.

Conformément aux enseignements de l'invention, il n'est plus nécessaire d'intervenir en partie basse, c'est-à-dire dans une zone dangereuse de l'installation de dépoussiérage.

## Revendications

1. Manche (10) de filtration de forme générale tubulaire destinée à équiper une installation de filtration (16, 44) dans laquelle la manche (10) s'étend sensiblement verticalement, du type qui comporte :
- une extrémité supérieure ouverte (12) et une extrémité inférieure fermée (22, 48);
- une paroi latérale cylindrique (18) en matériau déformable de filtration ;
- et un lest individuel (24, 26) de mise en tension de la manche selon son axe général vertical qui est suspendu et fixé de manière démontable à l'extrémité inférieure (22, 48) de la manche par des moyens de fixation comportant une tige centrale (30) de fixation sensiblement coaxiale à l'axe général (X-X) de la manche, et un corps pesant (26) porté par la tige ;
**caractérisée en ce que** le corps pesant (26) comporte un trou central (32) traversé par la tige de fixation (30), et un élément amovible (84) de retenue du corps pesant (26) qui est porté par la tige (30) et **en ce que** le corps pesant (26) est en appui par gravité sur l'élément amovible (30).

2. Manche selon la revendication précédente, **caractérisée en ce que** l'élément amovible est une goupille (34) d'orientation radiale.

3. Manche selon la revendication 2, **caractérisée en ce que** la face inférieure (56) du corps pesant comporte un logement (63) dans lequel la goupille (34) est immobilisée radialement.

4. Manche selon l'une quelconque des revendications précédentes, **caractérisée en ce que** l'extrémité inférieure fermée (48) de la manche (10) comporte un anneau inférieur (50, 52) qui reçoit un crochet (54) de fixation du lest (24) qui est ainsi fixé de manière démontable à l'extrémité inférieure de la manche.

5. Manche selon la revendication précédente, **caractérisée en ce que** la manche (10) est fermée de manière étanche à son extrémité inférieure par une portion (48) de forme conique dont l'extrémité inférieure (50) est repliée verticalement et rabattue, puis cousue ou rivetée, pour constituer une boucle ou passant (52) qui reçoit le crochet (54) de fixation du lest (24).

6. Manche selon l'une des revendications 4 ou 5, **caractérisée en ce que** le crochet de fixation (54) se prolonge verticalement vers le bas par la tige de fixation (30).

7. Manche selon l'une des revendications 1 ou 2, **caractérisée en ce que** les moyens de fixation du lest comportent une plaque supérieure rigide (28) de forme sensiblement complémentaire de celle de l'extrémité inférieure (22) de la manche (10) à laquelle elle est fixée, et **en ce que** la tige de fixation (30) est portée par la plaque de fixation (28) sous laquelle elle s'étend verticalement vers le bas.

8. Manche selon la revendication 7, **caractérisée en ce que** l'extrémité inférieure fermée (22) de la manche comporte un fond sensiblement horizontal, **en ce que** le disque de fixation (28) est agencé à l'intérieur de la manche (10) en appui sur le fond (22), et **en ce que** la tige de fixation (30) s'étend verticalement vers le bas à travers un orifice central (32) du fond de la manche (10) qu'elle traverse de manière sensiblement étanche.

9. Manche selon la revendication 7, **caractérisée en ce que** l'extrémité inférieure fermée de la manche comporte un fond sensiblement horizontal (22), **en ce que** le disque de fixation (28) est agencé à l'extérieur de la manche sous le fond (22), et **en ce qu'**il est prévu des moyens démontables de fixation de la périphérie de la plaque au bord annulaire inférieur de la manche.

10. Manche de filtration selon l'une quelconque des revendications précédentes, **caractérisée en ce que** la paroi latérale cylindrique en matériau déformable de filtration (18) comporte une série d'anneaux rigides de renfort (20) répartis verticalement le long de la paroi.

11. Installation de filtration du type comportant une enceinte à l'intérieure de laquelle est agencée au moins une manche de filtration (10) selon l'une quelconque des revendications précédentes, **caractérisée en ce qu'**elle comporte des moyens démontables de fixation de l'extrémité supérieure ouverte (12) de la manche (10).

12. Installation selon la revendication précédente, **caractérisée en ce qu'**elle comporte des moyens de guidage (44) dans lesquels est reçu un tronçon d'extrémité inférieure (42) du lest.

13. Installation selon la revendication précédente, **caractérisée en ce que** la tige de fixation (30) se prolonge verticalement sous le corps pesant (26), et **en ce que** son tronçon d'extrémité libre inférieure (42) est reçu dans un puits (44) de guidage appartenant à l'installation.

14. Procédé de remplacement d'une manche de filtration (10) selon l'une quelconque des revendications 1 à 10 dans une installation selon l'une quelconque des revendications 11 à 12, **caractérisé en ce qu'**il consiste à :
- démonter l'extrémité supérieure (12) de la manche usagée à remplacer ;
- extraire la manche usagée avec son lest (24) ;
- démonter le lest (24) de l'extrémité inférieure (22, 48) de la manche usagée ;
- fixer ce lest (24) à l'extrémité inférieure du corps (18) d'une manche de remplacement (10) ;
- suspendre la manche de remplacement avec son lest à l'intérieur de l'enceinte (16, 46) ;
- fixer l'extrémité supérieure ouverte de la manche de remplacement.

15. Procédé selon la revendication précédente, **caractérisé en ce que** la manche usagée (10) est extraite hors de l'enceinte verticalement vers le haut.

## Claims

1. Filtering sleeve (10) having a tubular general shape and being intended to be fitted to a filtering installation (16, 44) in which the sleeve (10) extends substantially vertically, of the type comprising an open upper end (12) and a closed lower end (22, 48), a cylindrical lateral wall (18) made from a deformable filtering material, and an individual ballast (24, 26) for stressing the sleeve along its general vertical axis, which ballast is suspended and fixed in a detachable manner to the lower end (22, 48) of the sleeve by fixing means comprising a central fixing rod (30), which is substantially coaxial to the general axis (X-X) of the sleeve, and a weight element (26) carried by the rod, **characterised in that** the weight element (26) comprises a central hole (32), through which the fixing rod (30) passes, and a removable element (84) for holding the weight element (26), which is carried by the rod (30), and **in that** the weight element (26) rests by gravity against the removable element (30).

2. Sleeve according to the preceding claim, **characterised in that** the removable element is a radial orientation pin (34).

3. Sleeve according to claim 2, **characterised in that** the lower face (56) of the weight element comprises a recess (63) in which the pin (34) is radially immobilised.

4. Sleeve according to any one of the preceding claims, **characterised in that** the closed lower end (48) of the sleeve (10) comprises a lower ring (50, 52), which receives a hook (54) for fixing the ballast (24), which is thus fixed in a detachable manner to the lower end of the sleeve.

5. Sleeve according to the preceding claim, **characterised in that** the sleeve (10) is closed in a tight manner at its lower end by a conical portion (48), the lower end (50) of which is vertically folded and closed, then sewn or riveted, to form a loop (52) that receives the hook (54) for fixing the ballast (24).

6. Sleeve according to either claim 4 or claim 5, **characterised in that** the fixing hook (54) is extended vertically downward by the fixing rod (30).

7. Sleeve according to either claim 1 or claim 2, **characterised in that** the means for fixing the ballast comprise a rigid upper plate (28) having a shape substantially complementary to that of the lower end (22) of the sleeve (10) to which it is fixed, and **in that** the fixing rod (30) is carried by the fixing plate (28), below which it extends vertically downward.

8. Sleeve according to claim 7, **characterised in that** the closed lower end (22) of the sleeve comprises a substantially horizontal base, **in that** the fixing disc (28) is arranged inside the sleeve (10), resting on the base (22), and **in that** the fixing rod (30) extends vertically downward through a central orifice (32) in the base of the sleeve (10), through which it passes in a substantially tight manner.

9. Sleeve according to claim 7, **characterised in that** the closed lower end of the sleeve comprises a substantially horizontal base (22), **in that** the fixing disc (28) is arranged outside the sleeve, below the base (22), and **in that** it is provided with detachable means for fixing the periphery of the plate to the lower annular edge of the sleeve.

10. Filtering sleeve according to any one of the preceding claims, **characterised in that** the cylindrical lateral wall, which is made from a deformable filtering material (18), comprises a series of rigid reinforcing rings (20) distributed vertically along the wall.

11. Filtering installation of the type comprising a chamber inside which at least one filtering device (10) according to any one of the preceding claims is arranged, **characterised in that** it comprises detachable means for fixing the open upper end (12) of the sleeve (10).

12. Installation according to the preceding claim, **characterised in that** it comprises guiding means (44), in which a lower end portion (42) of the ballast is received.

13. Installation according to the preceding claim, **characterised in that** the fixing rod (30) extends vertically below the weight element (26), and **in that** its lower free end portion (42) is received in a guiding recess (44) pertaining to the installation.

14. Method for replacing a filtering sleeve (10) according to any one of claims 1 to 10 in an installation according to any one of claims 11 to 12, **characterised in that** it consists in detaching the upper end (12) of the worn sleeve to be replaced, in removing the worn sleeve, together with its ballast (24), in detaching the ballast (24) from the lower end (22, 48) of the worn sleeve, in fixing this ballast (24) to the lower end of the body (18) of a replacement sleeve (10), in suspending the replacement sleeve, together with its ballast, inside the chamber (16, 46), and in fixing the open upper end of the replacement sleeve.

15. Method according to the preceding claim, **characterised in that** the worn sleeve (10) is removed vertically upward from the chamber.

## Patentansprüche

1. Filterschlauch (10) von im allgemeinen röhrenartiger Form, dazu bestimmt, eine Filtervorrichtung (16, 44) auszustatten, in welcher sich der Schlauch (10) im wesentlichen senkrecht erstreckt, welcher aufweist:
- ein offenes oberes Ende (12) und ein geschlossenes unteres Ende (22, 48);
- eine zylindrische Seitenwand (18) aus verformbaren Filtermaterial;
- eine einzelne Beschwerung (24, 26), um den Schlauch entlang seiner im allgemeinen senkrechten Achse unter Spannung zu setzen, welche hängt und auf entfernbare Weise an dem unteren Ende (22, 48) des Schlauchs mit Befestigungsmitteln befestigt ist, die eine mittlere Befestigungsstange (30) aufweisen, die im wesentlichen koaxial zur Hauptachse (X-X) des Schlauchs ist, und einen Gewichtskörper (26), der von der Stange getragen wird;
**dadurch gekennzeichnet, dass** der Gewichtskörper (26) ein Mittelloch (32) aufweist, das von der Befestigungsstange (30) durchquert wird, und ein abnehmbares Element (34) zum Zurückhalten des Gewichtskörpers (26), welches von der Stange (30) getragen wird, und **dadurch**, dass der Gewichtskörper (26) durch Schwerkraft auf dem abnehmbaren Element (30) aufliegt.

2. Schlauch gemäß dem vorausgegangenen Anspruch, **dadurch gekennzeichnet, dass** das abnehmbare Element ein Stift (34) mit radialer Ausrichtung ist.

3. Schlauch gemäß Anspruch 2, **dadurch gekennzeichnet, dass** die Unterseite (56) des Gewichtskörpers einen Sitz (63) aufweist, in welchem der Stift (34) radial unbeweglich gemacht wird.

4. Schlauch gemäß einem der vorausgegangenen Ansprüche, **dadurch gekennzeichnet, dass** das untere geschlossene Ende (48) des Schlauchs (10) einen unteren Ring (50, 52) aufweist, welcher einen Haken (54) zur Befestigung der Beschwerung (24) aufweist, die somit auf entfernbare Weise an dem unteren Ende des Schlauchs befestigt ist.

5. Schlauch gemäß dem vorausgegangenen Anspruch, **dadurch gekennzeichnet, dass** der Schlauch (10) an seinem unteren Ende dicht verschlossen ist durch einen Bereich (48) mit konischer Form, dessen unteres Ende (50) senkrecht umgebogen und umgeklappt, dann geheftet oder genietet ist, um eine Schlinge oder Schlaufe (52) zu bilden, die den Haken (54) zum Befestigen der Beschwerung (24) aufnimmt.

6. Schlauch gemäß einem der Ansprüche 4 oder 5, **dadurch gekennzeichnet, dass** der Haken zum Befestigen (54) sich senkrecht nach unten durch die Befestigungsstange (30) verlängert.

7. Schlauch gemäß einem der Ansprüche 1 oder 2, **dadurch gekennzeichnet, dass** die Mittel zum Befestigen der Beschwerung eine starre obere Scheibe (28) mit im wesentlichen zu der des unteren Endes (22) des Schlauchs (10), an der diese befestigt ist, komplementärer Form aufweisen, und **dadurch**, dass die Befestigungsstange (30) von der Befestigungsscheibe (28) getragen wird, unter der sie sich senkrecht nach unten erstreckt.

8. Schlauch gemäß Anspruch 7, **dadurch gekennzeichnet, dass** das untere geschlossene Ende (22) des Schlauchs einen im wesentlichen waagerechten Boden aufweist, und **dadurch**, dass die Befestigungsscheibe (28) im Innern des Schlauchs (10) auf dem Boden (22) aufliegend angeordnet ist, und **dadurch**, dass sich die Befestigungsstange (30) senkrecht nach unten über eine Mittelöffnung (32) des Bodens des Schlauchs (10) erstreckt, den sie auf im Wesentlichen dichte Weise durchquert.

9. Schlauch gemäß Anspruch 7, **dadurch gekennzeichnet, dass** das untere geschlossene Ende des Schlauchs einen im wesentlichen waagerechten Boden (22) aufweist, und **dadurch**, dass die Befestigungsscheibe (28) außerhalb des Schlauchs unter dem Boden (22) angeordnet ist, und **dadurch**, dass entfernbare Mittel zum Befestigen des Umfangs der Scheibe an dem unteren ringförmigen Rand des Schlauchs vorgesehen sind.

10. Filterschlauch gemäß einem der vorausgegangenen Ansprüche, **dadurch gekennzeichnet, dass** die zylindrische Seitenwand aus verformbaren Filtermaterial (18) eine Reihe starrer Ringe zur Verstärkung (20) aufweist, die senkrecht entlang der Wand verteilt sind.

11. Filtervorrichtung der Art, welche einen geschlossenen Bereich aufweist, in dessen Inneren wenigstens ein Filterschlauch (10) gemäß einem der vorausgegangenen Ansprüche angeordnet ist, **dadurch gekennzeichnet, dass** dieser entfernbare Mittel zur Befestigung des oberen offenen Endes des (12) des Schlauchs (10) aufweist.

12. Vorrichtung gemäß dem vorausgegangenen Anspruch, **dadurch gekennzeichnet, dass** diese Mittel zum Führen (44) aufweist, in welchen ein unteres Endstück (42) der Beschwerung aufgenommen wird.

13. Vorrichtung gemäß dem vorausgegangenen Anspruch, **dadurch gekennzeichnet, dass** sich die Befestigungsstange (30) senkrecht unter dem Gewichtskörper (26) verlängert, und **dadurch**, dass ihr unteres freies Endstück (42) in einer Senke (44) zur Führung aufgenommen wird, die zu der Vorrichtung gehört.

14. Verfahren zum Ersetzen eines Filterschlauchs (10) gemäß einem der Ansprüche 1 bis 10 in einer Vorrichtung gemäß einem der Ansprüche 11 bis 12, **dadurch gekennzeichnet, dass** dieses besteht aus:
- Abnehmen des oberen Endes (12) des zu ersetzenden verbrauchten Schlauchs;
- Entfernen des verbrauchten Schlauchs mit seiner Beschwerung (24);
- Abnehmen der Beschwerung (24) von dem unteren Ende (22, 48) des verbrauchten Schlauchs;
- Befestigen der Beschwerung (24) an dem unteren Ende des Körpers (18) eines Ersatzschlauchs (10);
- Einhängen des Ersatzschlauchs mit seiner Beschwerung im Innern des abgeschlossenen Bereichs (16, 46);
- Befestigen des oberen offenen Endes des Ersatzschlauchs.

15. Verfahren gemäß dem vorausgegangenen Anspruch, **dadurch gekennzeichnet, dass** der verbrauchte Schlauch (10) außerhalb des abgeschlossenen Bereichs senkrecht nach oben entfernt wird.
